# EUROPEAN PATENT APPLICATION

(11) **EP 1 434 082 A1**
(43) Date of publication of application: **30.06.2004**
(21) Application number: 04005968.5
(22) Date of filing: 11.01.2001
(51) Int. Cl.: G02F 1/1337, G02F 1/1347

(54) **Multidomain liquid crystal display device with two liquid crystal layers**

(30) Priority: 11.01.2000 JP 2000006073; 12.12.2000 JP 2000376914
(62) Divisional of application: 01100092.4
(71) Applicant: Kabushiki Kaisha Toshiba, Tokyo (JP)
(72) Inventor: Takato, Koko, Minato-ku Tokyo (JP); Nakamura, Seiichi, Minato-ku Tokyo (JP)
(74) Representative: HOFFMANN - EITLE

(57) **Abstract**

A liquid crystal display device comprises a first liquid crystal layer (15), a second liquid crystal layer, alignement layers (13,14) orientating the second liquid crystal layer, and a driving circuit (1802) driving the first liquid layer, with the alignment layers (13,14) divided into a plurality of regions whereby the orientations of the alignment layers in adjacent regions differ from each other and the regions form a recognizable pattern. This makes it difficult to recognize a displayed image from directions other than the front of the display, and allows a static pattern to be seen when the display is viewed from directions other than the front; the pattern is used to display a figure or a trade name of a product.

## Description

### BACKGROUND OF THE INVENTION

### 1. Field of the Invention

The present invention relates to a liquid crystal display device, a terminal device or a portable terminal.

### 2. Discussion of the Background

Recent development of upsizing liquid crystal display devices has been expanding their market as providing display devices for note book type personal computers, monitors, and so on.

In conventional TN type liquid crystal display devices generally used, there was a problem in that a contrast of displayed image had too large dependence on viewing angle to make the display visible from a certain angle. The point, however, is being improved by taking measures such as the use of viewing angle compensation film to have made it possible to provide the liquid crystal display device with the same level of viewing angle as that of a CRT.

In USP 5,666,178 or USP 5,652,634, there are disclosed methods devised for broadening viewing angle in which there are provided in one pixel a plurality of sections, each with a different direction of a pre-tilt angle. In addition, in JP-A-9-5766, a method is disclosed in which there is provided a section with a different direction of a pre-tilt angle in one pixel. In thus disclosed prior art methods, the section with different direction of the pre-tilt angle is provided in one pixel for the purpose of broadening the viewing angle. A ratio between the areas of the sections with different direction of the pre-tilt angles is unique on all pixels, that is, one display in order to prevent uneven areas from occurring. Therefore, disclosure or suggestion is not given about the method of providing a specified image to be visible when the image is viewed from a specified direction.

In JP-A-61-51124 and JP-A-61-51125 disclose a device having plural display areas , whose liquid crystalline molecular orientation directions on the alignment films are different, on one substrate. The display patterns of the applications are typically numeral. Some of the numbers of the display patterns can be seen from one direction, and the others cannot be seen from the direction. These applications aim that at least one numeral on a display pattern can be seen from a direction.

On the other hand, conversely to the above, some displays are required which are only visible from the front without permitting to be viewed obliquely. This is for preventing documents with secrecy from being viewed by people other than the user of the display device when the documents are prepared or read in a public place, or for allowing the user to read or write such a document as a personal mail without minding people around the user. Here, let such a technology be called as "viewing angle narrowing technology".

The viewing angle narrowing technologies have been disclosed heretofore as a method of using a liquid crystal display device having a liquid crystal layer for image display and a liquid crystal layer for phase difference control together (JP-A-11-174489, JP-A-11-7045, JP-A-9-105958), that of using a lens sheet (JP-A-11-84357 and others), that of using a diffusing optical guide plate (JP-A-10-97199 and others), and so forth.

However, the above described methods included such problems as increasing the number of parts, and providing insufficiently narrowed viewing angle.

### SUMMARY OF THE INVENTION

Accordingly, it is an object of the present invention to provide a liquid crystal display device which displays an image without any difference from that displayed by a normal liquid crystal display device when viewed from the front, and also displays a fixed image being independent of an inputted image signal when viewed from a specified direction.

The present invention provide a liquid crystal display comprising a liquid crystal layer and alignment films sandwiching said liquid crystal layer, wherein surfaces of said alignment films are divided into a plurality of regions involving a plurality of pixel units, and liquid crystal orientations on said alignment film in adjacent said regions are different.

Said region may make a letter. Said region may make a visible figure.

A long side of a minimum hypothetical rectangular containing said region may be equal to or larger than 0.1 millimeter. Said figure may be square.

A maximum voltage for driving said liquid crystal layer may be less than a voltage of a saturated voltage of said liquid crystal layer. Said maximum voltage for driving said liquid crystal layer Vm and said saturated voltage Vs have a following relation: 0.005Vs ≤ Vm ≤ 0.7Vs.

Said orientation in one of said region may be unique. Said orientation of said alignment film of the same color element in one of said region may be unique.

The present invention provides a liquid crystal display comprising a liquid crystal layer and alignment films sandwiching said liquid crystal layer, wherein surfaces of said alignment films are divided into a plurality of regions having different directions of orientations, and a ratio of said regions in at least one pixel is different from a ratio of said regions in the other pixel.
Said region may make a letter. Said region may make a visible figure.

Further, the present invention provides a liquid crystal display comprising a liquid crystal layer alignment films sandwiching said liquid crystal layer and a driving circuit for said liquid crystal layer, wherein an image formed from said driving circuit is displayed head on and a fixed image independent of said driving circuit is displayed to oblique direction.

Said alignment films may have a plurality of regions whose orientations of said alignment films are different.

Said fixed image may be a letter. Said fixed image may be a visible figure. Said fixed image may have a color.

The present invention provides a liquid crystal display comprising a liquid crystal layer alignment films sandwiching said liquid crystal layer and a driving circuit for said liquid crystal layer, wherein an image formed from said driving circuit is displayed to a normal direction of said liquid crystal layer and a fixed image independent of said driving circuit is displayed to a direction except said normal direction.

The present invention provides a liquid crystal display comprising a first liquid crystal layer displaying an image formed from a driving circuit a second liquid crystal layer; and alignment films sandwiching said second liquid crystal layer wherein said alignment film has regions containing a visible figure, and orientations of adjacent said regions are different.

The present invention provides a liquid crystal display comprising a liquid crystal layer a pair of substrates sandwiching said liquid crystal layer and a driving circuit for said liquid crystal layer, wherein an image formed from said driving circuit is displayed head on and a fixed image independent of said driving circuit is displayed to oblique direction.
Said substrate may be made of glass.

Said driving circuit may be formed on said substrate. Said driving circuit may be formed separately from said substrate.

The present invention provides a terminal device comprising a liquid crystal layer a pair of substrates sandwiching said liquid crystal layer and a driving circuit for said liquid crystal layer, wherein an image formed from said driving circuit is displayed head on and a fixed image independent of said driving circuit is displayed to oblique direction.

The present invention provides a portable terminal device comprising a liquid crystal layer a pair of substrates sandwiching said liquid crystal layer and a driving circuit for said liquid crystal layer, wherein an image formed from said driving circuit is displayed head on and a fixed image independent of said driving circuit is displayed to oblique direction.

According to the present invention, the alignment films in a liquid crystal display device is divided into a plurality of regions, in each of which direction of orientation is made differed from those in other regions so that some of the regions can be seen in dark colors such as black when viewed from a specified direction. This is an application of variation of viewing angle of the liquid crystal display device that is dependent on a direction of interfacial modification for orientation performed on the alignment film.

Thus, some of the regions seen in a specified color from a specified direction prevent an image displayed on a screen from being looked into from a certain direction.

Moreover, a fixed image is allowed to be viewed from a specified direction independently of display of an image signal inputted to the liquid crystal display device.

### BRIEF DESCRIPTION OF THE DRAWINGS

FIG. 1 is a cross sectional view showing a first embodiment of a liquid crystal display device according to the present invention;
FIG. 2 is a plan view illustrating an arrangement of region a and region b, in each of which direction of liquid crystal orientation is different from the other, in the first embodiment of the liquid crystal display device according to the present invention;
FIG. 3 is a view illustrating directions of orientation of liquid crystal in the region a and the region b, with an arrow in solid line showing a direction of rubbing in a lower substrate and an arrow in a dotted line showing a direction of rubbing in an upper substrate;
FIG. 4 is a view illustrating directions of alignment treatment on alignment layer in the liquid crystal display device, in which an arrow D represents an example of a looking direction. From the direction D, the region a looks black independent of the signal voltage into the liquid crystal layer. On the other hand, the region b looks black from the opposite direction of the direction D.
FIG. 5(a) is a conceptual cross sectional view showing a region 51 in which an image displayed by the liquid crystal in the region a is visible (visible region) and regions 52 in which the image is invisible (invisible region) such that the region a is seen in black;
FIG. 5(b) is a conceptual cross sectional view showing a visible region 53 of an image displayed by the liquid crystal in the region b and invisible regions 54 in which the region b is seen in black;
FIG. 6 is a view showing an example of an image displayed on the first embodiment of the liquid crystal display device when viewed from the front;
FIG. 7 is a view showing the image presented in FIG. 6 when the liquid crystal display device is viewed from the direction indicated by the arrow D in FIG. 4, in which regions a are seen in black to make the indicated image difficult to be seen when the liquid crystal display device is laterally viewed from an oblique direction;
FIG. 8 is a diagram illustrating eight directions, 1 to 8, over which viewing angles are measured for exhibiting that the viewing angle differs depending on viewing directions;
FIG. 9 is a table showing results of the measurement of viewing angle dependence of the liquid crystal display devices in the first to fourth embodiments and four comparison examples;
FIG. 10(a) is a plan view illustrating an arrangement of a region a and a region b, in each of which direction of liquid crystal orientation is different from the other, in the second embodiment of the liquid crystal display device according to the present invention;
FIG. 10(b) is a view illustrating directions of rubbing in the region a and the region b in FIG. 10(a), with an arrow in solid line showing a direction of rubbing in a lower substrate and an arrow in a dotted line showing a direction of rubbing in an upper substrate;
FIG. 11 is a plan view illustrating directions of rubbing in substrates for liquid crystal display devices in comparison examples of liquid crystal display devices;
FIG. 12 is a view illustrating an example of a display of a logotype such as a company name or a trade name of a product which logotype is seen in being superimposed on the displayed image typically shown in FIG. 6 when the image is viewed from the side;
FIG. 13 is a view illustrating an example of a display of a figure as seen superimposed on the displayed image typically shown in FIG. 6 when the image is viewed from the side;
FIG. 14 is a view illustrating the region a in which red, green and blue pixels of a color liquid crystal display device are arranged;
FIG. 15 is a view illustrating that the direction of orientation of the liquid crystal in a pixel R is made differed from those of pixels G and B;
FIG. 16 is a view illustrating an alignment film with uniform rubbing being given thereto as a first step in a method of forming regions with different orientation direction of liquid crystal in the alignment film; and
FIG. 17 is a view showing an example of a photomask used in a step of changing the state of orientation of the alignment film prepared as shown in FIG. 16 by light irradiation.
FIG. 18 is a schematic diagram of a typical liquid crystal display of the present invention.
FIG. 19 shows two pixels in the display which have different ratios between the region a and region b.
FIG. 20 shows an example of a cellular phone applied the liquid crystal display of the present invention.
FIG. 21 shows an example of a palmtop computer applied the liquid crystal display of the present invention.

### DETAILED DESCRIPTION OF THE PREFERRED EMBODIMENTS

Embodiments of the liquid crystal display device according to the present invention will be explained in detail in the following with reference to drawings. However, the present invention is not limited to the embodiments. In addition, numerical values such as those of thickness and used materials are presented as examples.

A first embodiment of the present invention will be explained. In the embodiment, an alignment film is divided into a plurality of square regions. In one square region, one direction of orientation is given, while the direction of orientation is changed in an adjacent square region, so that plurality kinds of directions of orientations are periodically repeated over the arranged square regions.

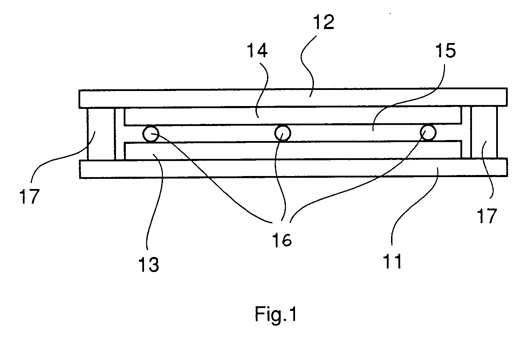

FIGURE 1 is a cross sectional view showing the first embodiment of a liquid crystal display device according to the present invention. The cross sectional view is referred to for explaining a general structure of a liquid crystal display device. Thus, structures of the following embodiments are not limited to that shown in FIG. 1.

On a glass substrate 11 with Thin Film Transistors (TFT) being formed thereon, there is provided a polyimide alignment film 13. On the other hand, on a glass substrate 12 with color filters formed thereon, there is provided a polyimide alignment film 14. Between the glass substrate 11 and the glass substrate 12, there is sealed-in a liquid crystal material 15. The glass substrate 11 and the glass substrate 12 are spaced by spacers 16 with a particle diameter of about 5µm. Each end of the glass substrate is sealed by an epoxy sealer 17. In this way, a liquid crystal display device is constituted with a uniform thickness. For keeping the space between the glass substrates 11 and 12, instead of using the spacer 16, columns may be used between the substrates. In a small display, the space may be kept only by the sealer 17 provided at each end of the glass substrate.

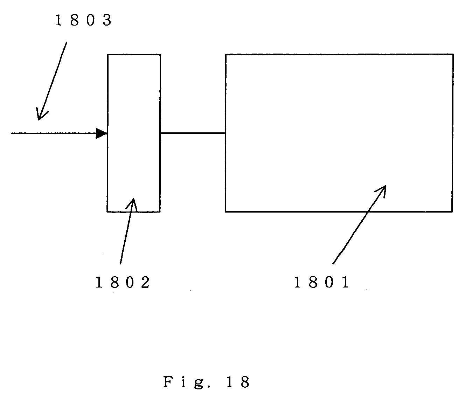

As shown in Fig. 18, the liquid crystal display 1801 which has the upper and lower substrates with the liquid crystal layer held between them, a driving circuit 1802 is connected for driving the liquid crystal display 1801. The signal 1803 for display on the liquid crystal display 1801 is input to the driving circuit 1801. The driving circuit 1802 may be formed on the upper or lower substrate or may be formed separately from the display 1801.

For the liquid crystal material, the TN type liquid crystal LIXON 5010 supplied from Chisso Petrochemical Co., Ltd. can be used which is used as a TN type liquid crystal material.

For the alignment film, Polyimide P1-1051 for alignment film supplied from Japan Synthetic Rubber Co., Ltd. can be used.

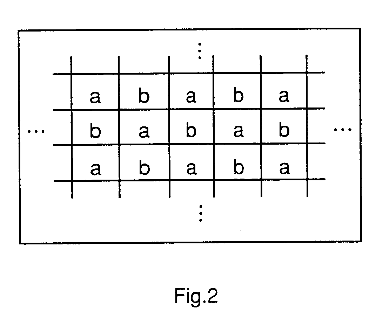

A plan view of the embodiment of the liquid crystal display device according to the present invention is shown in FIG. 2.

As to expressions an "upper substrate" and "lower substrate" that will be used hereinafter, one of the glass substrate 11 provided with the TFTs and the glass substrate 12 provided with the color filters will be called as an upper substrate, and the other will be called as a lower substrate.

On the alignment film, an interfacial modification for orientation is given so that two kinds of regions a and b shown in FIG. 2, with directions of orientation different from each other, are alternately arranged. Here, the interfacial modification for orientation is given by rubbing, for example.

The display screen subdivided into two kinds of small regions a and b is treated with the interfacial modification for orientation. Each of the small regions is formed into, for example, a square with a side of about 2.5mm, which is a sufficiently larger size compared with that of the pixel, so that the region can be directly recognized.

In the embodiment, the rubbing is carried out as follows. First, a polyimide film is formed on the lower substrate before uniform rubbing is performed all over the polyimide film.

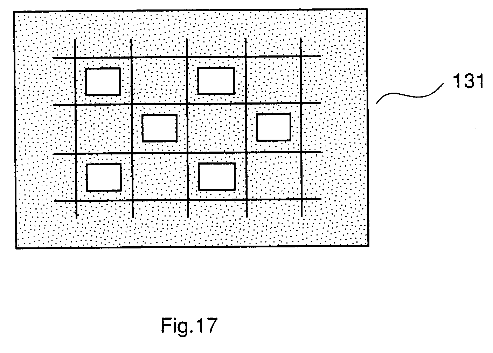

Next to this, either the regions a or the regions b are masked with a metal thin film made of stainless steel as shown in FIG. 17, for example. Here, the regions b are to be masked on which rubbing is performed in the opposite direction to that of the originally performed rubbing. Then, the metal thin film is removed to provide a substrate formed as shown in FIG. 2.

On the whole face of the upper substrate facing the lower substrate as shown in Fig. 2, a polyimide film is also formed in the same way as that formed on the lower substrate. After this, rubbing is performed on the whole face of the polyimide film so that the direction of rubbing becomes perpendicular to the direction of the rubbing performed on the lower substrate when both of the substrates are made faced. Then, regions corresponding to either the regions a or the regions b of the lower substrate are masked with a metal thin film made of stainless steel. Here, the regions b are to be masked, over which rubbing is performed in the direction perpendicular to the direction of the rubbing performed on the lower substrate and in reverse to the direction performed on the regions b. The metal thin film is removed thereafter.

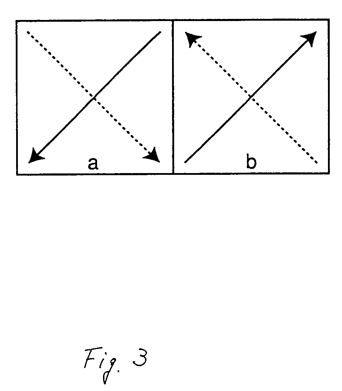

The interfacial modification for orientation in the region a and the region b is given in the directions indicated with arrows in solid lines on the lower substrate, and those in dotted lines on the upper substrate as shown in FIG. 3. The directions are made opposite to each other in the region a and the region b. Moreover, the upper and lower substrates is arranged so that each of the corresponding square regions are faced with the direction of orientation in the upper substrate being made perpendicular to that in the lower substrate in each of the regions a and b.

In the embodiment of the liquid crystal display device, a sheet polarizer is provided on a surface of each of the upper and lower substrates. Here, planes of polarization of the sheet polarizers on the upper and lower substrates are made in parallel with each other so that the display is provided as being in black when no voltage is applied. In addition, the sheet polarizers are arranged so that the planes of polarization are further made in parallel with the direction of rubbing in either the region a or the region b. The maximum voltage applied when driving the display device was determined to be about 70% of the saturated voltage of the liquid crystal.

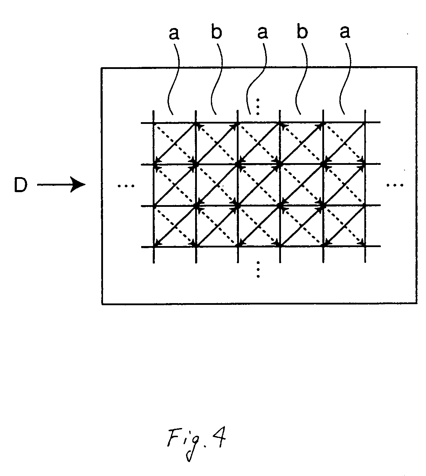

With the above processing, the substrate is obtained as shown in FIG. 4. In this type of liquid crystal display device, when obliquely viewed from the direction indicated by an arrow D, the regions a exhibit strong dependence on the viewing angle to make the display invisible. Namely, the regions a are seen in black or in being blackened regardless of the display signal. On the other hand, when viewed from the direction opposite to that indicated by the arrow D, the regions b become invisible.

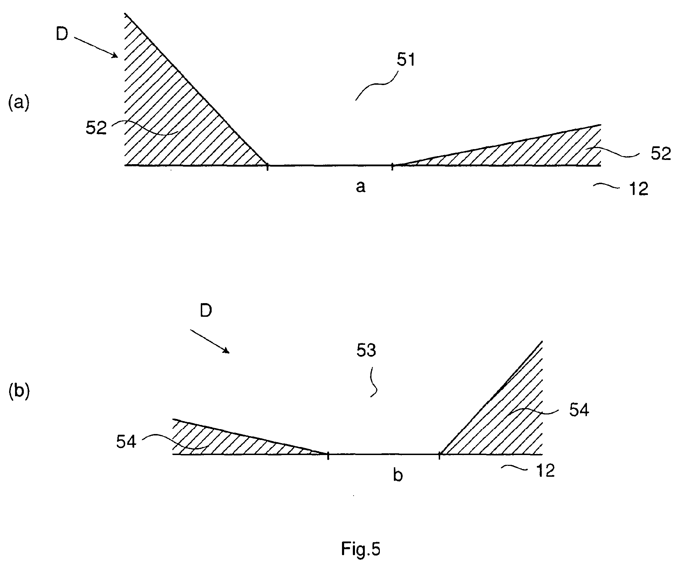

This will be further explained with reference to FIGS. 5(a) and 5(b), which are enlarged cross sectional views showing surface part of the liquid crystal display device with a state on the region a shown in FIG. 5(a) and that on the region b in FIG. 5(b). Although the regions a and b are actually defined on the alignment film, here, for convenience in explanation, the regions a and b are conceptually shown directly on the glass substrate 12.

FIGURE 5(a) shows an image visible region 51 and image invisible regions 52 for the region a. Namely, when the screen is viewed from the image visible region 51, the display can be seen as being functioning in accordance with the condition of the liquid crystal in a normal liquid crystal display device. On the other hand, when viewed from the image invisible regions 52, the display is always seen in black or in being blackened regardless of the condition of the liquid crystal. The display in black or in being blackened is hereinafter expressed as in "black". For example, the region a, when viewed from the direction D, is seen as being in black.

FIGURE 5(b) shows an image visible region 53 and image invisible regions 54 for the region b. In the image visible region 53,an image displayed in the region b by the liquid crystal can be seen in the direction D. From the image invisible regions 54, however, the region b is seen as being in black.

Since the regions a and the regions b are arranged side by side, when the display is viewed from a certain direction, from the direction D, for example, a normal liquid crystal display can be seen about the regions b, while the regions a are seen in black. This prevents the whole image displayed on the liquid crystal display device from being completely seen.

Therefore, except for the case in which the display is viewed approximately from the front, whole display is invisible to make it difficult to understand displayed information. Namely, from the direction other than that of the front, black squares of the regions a or the regions b are recognized on the display screen as if the displayed image were scrambled.

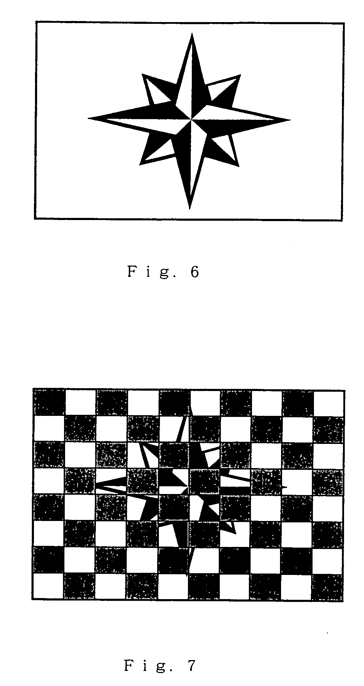

For example, consider an image displayed in the liquid crystal display device as shown in FIG. 6. The image can be seen correctly as shown in FIG. 6 approximately from the front of the display device. However, when the display is viewed obliquely from the side, from the direction D, for example, the pattern is seen with scattered black patterns as shown in FIG. 7, which makes it impossible or difficult to see correctly the displayed details.

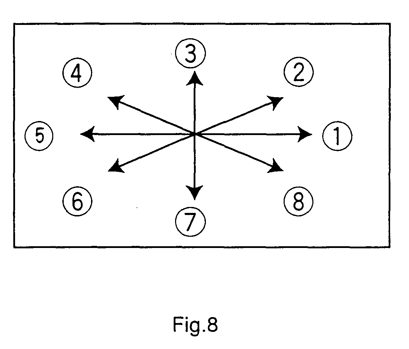

With respect to the visibility of the embodiment of the liquid crystal display device, a test was carried out, in which fifteen persons observed images and figures displayed in the liquid crystal display device from the directions with the numbers from 1 to 8 in FIG. 8. The images were constituted of characters such as Chinese characters, hiragana characters and alphabetic characters, and figures were those such as photographs. In the test, angles at which the displayed images were visible were measured with the results of a plurality of measurements averaged. Here, the angles at which the displayed images were visible were presented as angles of inclination from the normal to the screen, that is, direct front of the screen, which was taken as zero degree. The measurements on characters and figures were separately carried out.

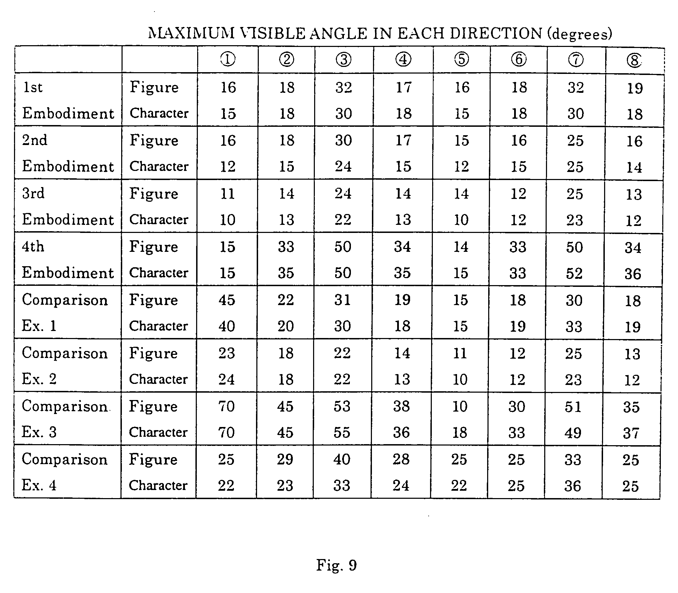

The results of the measurements are presented in a table shown in FIG. 9 with the results on the first embodiment given in the first field of the table.

With respect to figures, in the directions 1 and 5, namely, in the horizontal direction, an inclination about 16 degrees from the front makes the displayed figures invisible. In the directions 3 and 7, namely, in the vertical direction, inclinations up to about 32 degrees from the front made the displayed figures visible. In the directions 2, 4, 6 and 8 as being intermediate between the above horizontal and vertical directions, inclinations up to about 18 degrees from the front made the displayed figures visible.

With respect to the characters, in the horizontal direction, an inclination about 15 degrees from the front makes the displayed characters difficult to be readable. In the vertical direction, inclinations up to about 30 degrees made the displayed characters readable.

The region that allows the characters readable is a little narrower than that allowing the figures visible. It is considered that this is because the characters are more fine and complicated than the figures. However, there is not so significant difference between the characters and the figures for being recognized.

As is understood from the results of the measurement, the liquid crystal display device provided with the regions a and b as in the embodiment always allows a normal displayed image to be seen when viewed from the front, but makes it impossible to allow the displayed normal image to be correctly visible with an inclination of 20 degrees or more from the front when viewed obliquely from the right and left sides. This prevents the displayed image from being correctly recognized when viewed from the side direction to permit realization of a liquid crystal display device by which only the user of the display can see the displayed image.

For example, realization of a mobile terminal or a cellular phone is possible which can be operated on one's hand with a display screen allowing the user to see the displayed image and prevents people around it from seeing the displayed image even if they try to look into that.

When the display screen is viewed from the directions other than the front direction, a pattern due to orientation given to the alignment film becomes visible from some direction irrespective of the displayed image. Therefore, it is favorable to suitably select the pattern depending on the purpose of the mainly displayed image.

Although a liquid crystal display of the normally black type, which displays black without applying voltage, is explained above, a liquid crystal display of the normally white type, which displays white without applying voltage, can be used also. In the normally white type, it is preferable that a bias voltage from 0.5% to 70% of the saturated voltage of the liquid crystal is applied. It is more preferable that a bias voltage from 5% to 50% of the saturated voltage of the liquid crystal is applied. It is more preferable that a bias voltage from 5% to 20% of the saturated voltage of the liquid crystal is applied.

Next, a second embodiment will be explained.

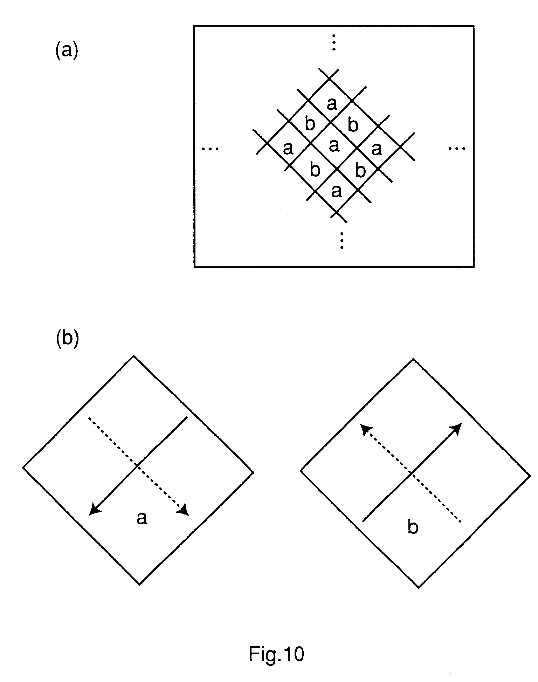

In the second embodiment, the regions a and the regions b were arranged in a pattern as shown in FIG. 10(a). With respect to constitutions other than the above was the same as those in the first embodiment. In the embodiment, the directions of diagonals of the regions a and the regions b were made so as to match the vertical direction for an image observer. Although the pattern as shown in FIG. 10(a) is explained as an embodiment, it is also possible to arrange the pattern such that the vertical direction thereof does not match the directions of the diagonals of the regions a and the regions b.

Also in the second embodiment, the directions of rubbing in the regions a and the regions b on the upper substrate are represented by arrows in dotted lines and those on the lower substrate are represented by arrows in solid lines. In the pattern in the embodiment, the square regions are turned from those in the first embodiment by 45 degrees. The regions a and the regions b are to be squares each with a side of about 2.5mm.

Also in the liquid crystal display device according to the second embodiment, viewing angles were evaluated like in the first embodiment. The averaged values of thus obtained angles of inclination from the normal to the screen are shown in the table in FIG. 9. Also in the second embodiment, approximately the same results as in the first embodiment were obtained with readable angles in the horizontal direction allowed to be made smaller.

Following this, a third embodiment will be explained.

In the third embodiment, the STN type liquid crystal ZLI-4540 (270 Degree Twist) supplied from Merck Japan Co., Ltd. was used for the liquid crystal material. Moreover, stripe-shaped ITO electrodes were provided on each of the upper and lower glass substrates. Here, the stripe-shaped ITO electrodes on the upper glass substrate were provided so as to be perpendicular to those on the lower glass substrate when the two glass substrates were made faced each other.

With respect to other constituents, they were provided with the same materials and conditions as those in the second embodiment. The stripe-shaped ITO electrodes, each being formed to have a width of about 200µm, were to be arranged at 20µm intervals.

On the ITO electrodes provided on each of the upper and lower substrates, an alignment layer was formed which was subjected to rubbing like in the second embodiment to form the regions a and b on the substrates.

The polarizing filters are formed to display black when no voltage is applied. And the maximum voltage of the driving signals is 70% of the saturated voltage of the liquid crystal.

On applying a specified voltage to selected ITO electrodes on the upper and lower substrates, a molecular orientation direction of a liquid crystal at an intersection of the respective ITO electrodes is changed due to the influence of an electric field. This changes light transmittance of the liquid crystal, by which a desired image can be displayed.

Also in the third embodiment, with the regions a and the regions b being provided, a normal image can be seen when the screen is viewed from the front, while, when obliquely viewed from the side, only either of the regions a or the regions b can be seen to make it impossible to observe the whole image.

Also in the liquid crystal display device according to the third embodiment, viewing angles were evaluated like in the first embodiment. The results are also shown in the table in FIG. 9.

Also in the embodiment, it can be understood that the viewing angles in the horizontal direction for the displayed image are limited. The embodiment originally provides small visible angles to make it impossible to recognize the image with an inclination about 25 degrees from the front. In particular, in the directions 1 and 5, inclinations of 11 to 14 degrees from the front make it impossible to recognize the displayed image. That is, by providing the regions a and b, the viewing angle in the horizontal direction could be limited.

When liquid crystal display of the normally white type is used, it is preferable that a bias voltage from 0.5% to 70% of the saturated voltage of the liquid crystal is applied. It is more preferable that a bias voltage from 5% to 50% of the saturated voltage of the liquid crystal is applied. It is more preferable that a bias voltage from 5% to 20% of the saturated voltage of the liquid crystal is applied.

Next, the fourth embodiment will be explained.

In the fourth embodiment, twisted FLC type ferroelectric liquid crystal 2005, supplied from Chisso Petrochemical Co., Ltd., that exhibits high speed response was used as a liquid crystal material. A thickness of the liquid crystal layer, i.e. cell gap, is about 2µm, and the maximum driving voltage is taken as the saturated voltage of the liquid crystal. The polarized direction of the polarizing film is set as parallel to the rubbing direction of the alignment layers on the substrates. In this case, the device is normally white type. The viewing angles of this device become the maximum when no voltage is applied. The other constitution of the device is the same as that in the first embodiment.

Also in the liquid crystal display device according to the fourth embodiment, viewing angles were evaluated like in the first embodiment. Averaged values of thus obtained angles of inclination from the normal to the screen are shown in the table in FIG. 9.

In this embodiment, in the vertical direction, namely in the direction 3 and the direction 7, it is possible to see the displayed image even with an inclination 50 degrees from the front. However, when viewed from the side, namely, viewed from the direction 1 and the direction 5, an inclination about 15 degrees from the front makes it impossible to recognize the displayed image. In this embodiment, the effect of providing the regions a and b is remarkable.

In the following, explanation will be made about comparison examples which were prepared for proving the effect of the present invention.

### (Comparison Examples 1, 2 and 3)

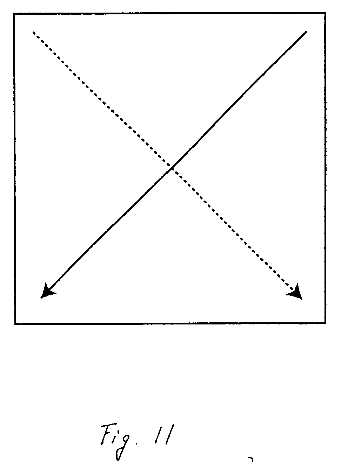

Three kinds of liquid crystal display devices were prepared in each of which interfacial modification of orientation was given on a display screen as shown in FIG. 11 without dividing the screen into a plurality of the regions with different directions of orientation. Other parts of the three display devices were constituted in the same way as the second, third, and fourth embodiments to be provided as comparison examples 1, 2 and 3, respectively. Also in each of the comparison examples, the direction of rubbing on an upper substrate is represented by an arrow in a dotted line, and that on a lower substrate by an arrow in a solid line.

Also in the liquid crystal display device of the comparison examples, viewing angles were evaluated like in the first embodiment. Averaged values of thus obtained angles of inclination from the normal to the screen are shown in the table in FIG. 9.

In the comparison example 1, when viewed from the direction 1, the image can be seen up to about 40 degrees of inclinations from the front. However, when viewed from the opposite direction 5, an inclination of approximately 15 degrees from the front makes the image invisible. In addition, in the vertical direction, an inclination of about 30 degrees from the front makes the image invisible. In this case, a normal image is always visible from the front. From the direction 1, the displayed image can be seen over a wide range.

In the comparison example 2, when viewed from the direction 1, inclinations of 23 and 24 degrees from the front make the image invisible. From the direction 5, an inclination of about 10 degrees from the front makes the image invisible. In the vertical direction, inclinations of several degrees above 20 degrees from the front make the image invisible. Also in this case, when viewed from the direction 1, the displayed image is visible over a wide range.

In the comparison example 3, inclinations up to about 70 degrees from the front make the image visible from the direction 1. From the direction 5, an inclination of 20 degrees from the front makes the image invisible. From the direction 1, the displayed image is visible over a wide range.

Furthermore, by using the results shown in FIG. 9, a comparison was made about the display devices with TN type liquid crystal by comparing the first and the second embodiments with the comparison example 1, a comparison about STN type by comparing the third embodiment with the comparison example 2, and a comparison about twisted FLC type by comparing the fourth embodiment with the comparison example 3.

In all of the display devices with the above types of the liquid crystal, it is shown that dramatically narrower viewing angles in the horizontal direction are provided by the embodiments according to the present invention.

Therefore, it is proved that all of types of the liquid crystal material can be used for narrowing viewing angle according to the present invention. In particular, with the use of the twisted FLC type that exhibits high speed response, a clear moving image could be recognized in checking display quality of the image viewed from the front.

In the above explained embodiments, the interfacial modification of orientation was given for limiting viewing angle in the horizontal direction to have made it possible to provide the results as presented in FIG. 9. Thus, by changing the direction of orientation, it is of course possible to limit a viewing angle in an arbitrary direction.

### (Comparison Example 4)

A liquid crystal display device like that of the embodiment 1 with a saturated voltage of the liquid crystal layer supplied thereto was prepared as a comparison example 4. Viewing angles in this example were evaluated like in the first embodiment. Averaged values of thus obtained angles of inclination from the normal to the screen are shown in the table in FIG. 9.

In the comparison example 4, when viewed from the side, namely from the direction 1 and the direction 5, an inclination about 25 degrees from the front made the image invisible. However, in the vertical direction, inclinations up to several degrees above 30 degrees from the front made the image visible, with little dependence on viewing directions exhibited.

Comparison of the first embodiment with the comparison example 4 proved that the maximum driving voltage taken as the saturated voltage of the liquid crystal layer broadens the viewing angle. Therefore, the maximum driving voltage is preferably taken as being equal to or below about 90% of the saturated voltage of the liquid crystal layer in the normally black type. This is because the liquid crystals of the TN type and STN type exhibit not so remarkable dependence on the viewing angle under an application of no voltage or saturated voltage that little dependence on the viewing angle appears at or above about 90% of the saturated voltage.

On the other hand, the maximum driving voltage must be at or above 40% of the saturated voltage of the liquid crystal layer. This is because a desirable contrast of an image cannot be obtained under the driving voltage below about 40% of the saturated voltage to degrade the image quality.

When a liquid crystal display of the normally white type is used, it is preferable that a bias voltage from about 0.5% to about 70% of the saturated voltage of the liquid crystal is applied. It is more preferable that a bias voltage from about 5% to about 50% of the saturated voltage of the liquid crystal is applied. It is more preferable that a bias voltage from about 5% to about 20% of the saturated voltage of the liquid crystal is applied.

Next, a fifth embodiment will be explained. Also in this embodiment, there was used a liquid crystal display device like that in the first embodiment. However, it is possible to use the liquid crystal display devices explained in the second embodiment and later or those with like functions.

In the above embodiments, when the display is viewed from directions other than from the front, a pattern provided on the alignment film is observed regardless of the displayed image. This allows the display to provide a desired fixed pattern to be seen when the display is viewed from the side.

Namely, by applying the fact that the fixed pattern having no relation to the image to be displayed is recognized from the direction other than from the front, a specified figure can be made visible from the direction other than from the front. Instead of the checkered pattern as typically shown in FIG. 7 in the first embodiment, a desired figure can be displayed as a fixed pattern by suitably arranging the regions a and b, namely, by forming a desired orientation pattern on the alignment layer.

The fixed pattern can be formed so that, for example, a trade name of a product, a logotype of a company name or a popular cartoon character can be always seen when the display is viewed from the side. Such a liquid crystal display device as can display a fixed pattern like a trade name of a product is effectively mounted on a cellular phone that is presented to a prize winner.

As an example, when the liquid crystal display device is presenting the image shown in FIG. 6, the image displayed by the liquid crystal layer can be made to be seen as being superposed with patterns formed with regions with different directions of orientation as shown in FIG. 12 when the display is viewed from the side. In this way, a fixed figure such as a company name or a trade name of a product can be displayed as a fixed pattern. Here, the fixed pattern such as the company name is displayed regardless of the display in the liquid crystal layer as being independent of an input signal to the liquid crystal layer.

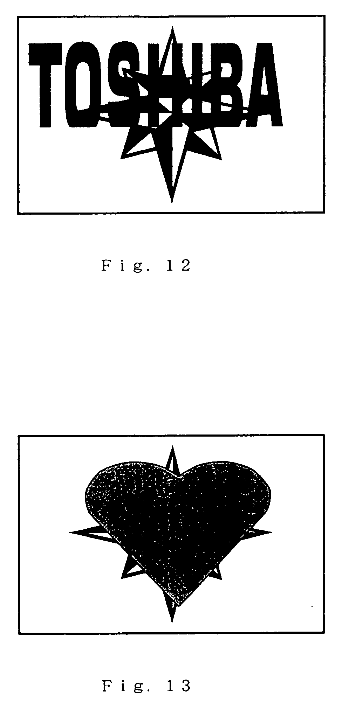

In addition, another example of the region with different orientation is shown in FIG. 13 to which a heart-shape is used. When the alignment film is divided into two kinds of regions a and b with such a single figure as occupies a large part of the display, the display is seen, for example, as shown in FIG. 13 when laterally viewed from the right. Conversely, when laterally viewed from the left, the display is seen with a figure displayed in the liquid crystal layer being within the heart-shaped pattern whose outside is seen in black. Instead of the heart-shaped pattern in the example, any desired pattern can be formed as the fixed pattern.

A single fixed pattern that is large compared with the size of the display screen is effectively used as a message. However, the effect of preventing the display from being looked into from the side is lessened. Conversely, a fine pattern is effective in being used for preventing the display from being looked into, but provides lessened function for transmitting a message. Thus, the effect of preventing the display from being looked into and the effect of providing a message are incompatible. However, since the fixed pattern can be designed as desired, the fixed pattern can be formed by giving attention to compromise the above incompatible effects.

The fixed pattern can be prepared only by designing regions having changed directions of orientation. Therefore, no large change is necessary for the manufacturing process of the normal liquid crystal display device. Furthermore, a pattern for forming the regions in which the directions of orientation are made different can be so easily prepared that there is not so much loss in time in the manufacturing process compared with a normal one.

Next, a sixth embodiment will be explained.

Also in this embodiment, the liquid crystals display device like that in the first embodiment can be used. Moreover, it is possible to apply the sixth embodiment to the liquid crystal display devices explained in the second embodiment and later or other liquid crystal display devices which can provide color displays.

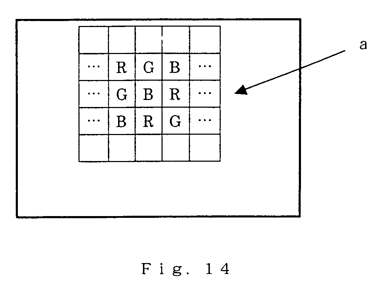

FIGURE 14 is a view showing an example of a liquid crystal display device that displays a color image, on the display of which there are arranged pixels displaying red (R), green (G) and blue (B). The way of arranging the R, G and B is not necessarily limited to that shown in FIG. 14.

Here, like in the first embodiment, the alignment layer is divided into regions a and regions b. Each of the divided regions must be divided so as to include a plurality of pixels and be visible as a region. For example, when the alignment layer is divided into the regions a or b shown in FIG. 2, each of the regions a and regions b has a size that includes a plurality of pixels. Therefore, it must be noted that the region a includes a plurality of pixels of R, G and B as shown in FIG. 14. The same is true about the region b.

In the following, an explanation will be made with attention focused on the region a. However, the same is true for the region b.

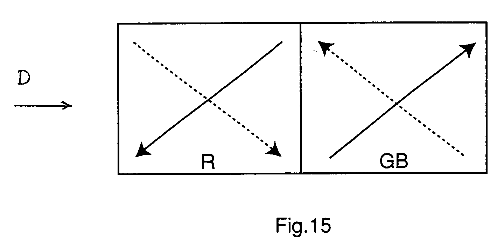

For example, only the direction of orientation in the pixel R in the region a is made differed from those in the pixels G and B. This can be made, for example, by taking a rubbing direction in the pixel R as being in reverse to those in the pixel G and pixel B as shown in FIG. 15.

Such a constitution allows the region a to be seen in bluish green when viewed from, for example, the direction D shown in FIG. 15, and in red when viewed from the side opposite to D. That is, by selectively changing the direction of orientation only in pixels in a specified color in the region a, it becomes possible for the region a to be seen as being colored when viewed from the side.

As explained above, with the region a allowed to be colored and formed in a desired pattern like in the fifth embodiment, it becomes possible to provide a colored fixed image as being visible when viewed from the side.

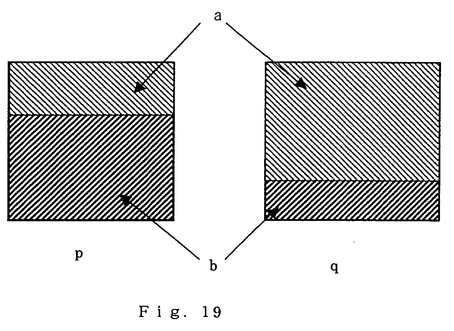

Any desired tint can be displayed depending on the way of selecting pixels R, G and B in the regions a. For example, when the region is defined by pixel units, the fixed patterns can be expressed eight colors from a viewing direction. When a pixel is divided in a ratio by the regions as shown in Fig. 19, the fixed patterns can be expressed any intensity levels or colors such as photos. In Fig. 19, pixels p and q in the display are divided two regions a and b. The ratio of the areas between the region a and b in the pixel p is different from that in pixel b. The pixels, which have different ratios of the regions having the different direction of the orientation, is formed in the display, so that unevenness in the display is made intentionally. The unevenness is used for the fixed figures.

Thus, according to the sixth example, it is possible to color a desired fixed pattern.

The above embodiment was explained as an example of using the mask rubbing method for forming the regions a and b which method physically shields regions other than the region to be subjected to rubbing. In addition to the above method, in forming a plurality of regions with different directions of orientation, there is a method of irradiating a part of the alignment layer with light after rubbing. The irradiation changes pre-tilt angle of the alignment layer to form the irradiated part as a part with different dependence on viewing angle.

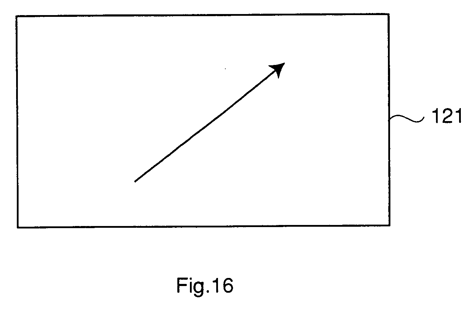

The method of changing pre-tilt angle by light irradiation will be explained with reference to FIG.16 and FIG. 17.

First, on a glass substrate 121, a polyimide film is formed, whole surface of which is then subjected to rubbing in a specified direction of orientation (in the direction indicated by an arrow, for example) as shown in FIG. 16.

Along with this, a photomask 131 is prepared which has a pattern as shown in FIG. 17.

With the photomask 131 set on the glass substrate 121 with the polyimide film, a visible-ultraviolet ray irradiation is performed on the glass substrate 121 from a high pressure mercury lamp of about 10 J/cm². The ultraviolet ray irradiation reduces pre-tilt angle of the alignment layer in the region irradiated by the ultraviolet ray.

Next to this, on a glass substrate facing the glass substrate 121, a polyimide film is similarly formed to be subjected to rubbing. On the glass substrate facing the glass substrate 121, a photomask, which has a reversed pattern to that of the photomask 131 shown in FIG. 17, namely, with the opening thereof shielded and the shielded part opened, is set and similar ultraviolet ray irradiation is performed. The two glass substrates are arranged so that the irradiated parts of one substrate just face the unirradiated parts of the other substrate.

Following this, between the glass substrates thus irradiated, nematic liquid crystal material is injected to form a liquid crystal display device.

Here, when a right-handedly twisted structure is stable with respect to regions where only rubbing is performed, left-handedly twisted liquid crystal is used. Conversely, when a left-handedly twisted structure is stable with respect to regions where only rubbing is performed, right-handedly twisted liquid crystal is injected. This makes it possible to form two regions with directions exhibiting strong dependence on viewing angle different from each other.

For example, when forming regions with a plurality of directions of orientation, two or more kinds of directions of orientation can be sufficiently taken. Two kinds of directions of orientation make it difficult to recognize the display from the direction other than from the intended direction.

In the above embodiment, an example is explained in which a region seen in black when viewed from the direction 1 shown in FIG. 8 and a region seen in black when viewed from the direction 5 are alternately arranged. However, the arrangement is not necessarily to be alternating. Namely, it is possible to arrange together on the screen the region seen in black when viewed from the direction 1, the region seen in black when viewed from the direction 5, and a region in which a normal image can be seen when viewed from the direction 1 and the direction 5.

In addition, shapes and sizes of the regions with different directions of orientation can be selected as desired from viewpoint of purpose or design etc. For example, the region can be formed at will in a shape of a polygon such as a parallelogram or a triangle, a circle, or an ellipse. The size of the region can be also changed depending on the purpose. For example, when a minimum quadrilateral considered as including the region has a length between about 0.1 mm and about 1cm, the display screen is made favorably unrecognizable from the direction other than from the front. Furthermore, it is preferable that the length of the quadrilateral is between about 0.5mm and about 5mm.

With respect to a sheet polarizer of the liquid crystal display device, it is arranged so that it provides either a black display or a white display when no voltage is applied.

In the viewing angle narrowing according to the present invention, it is preferable to drive the display with a voltage equal to or below the saturated voltage of the liquid crystal layer. Thus, it is better to set the liquid crystal display device so as to provide a black display when no voltage is applied. This allows the liquid crystal display device to present a sufficiently black display that provides a good image quality.

When a liquid crystal display of the normally white type is used, it is preferable that a bias voltage from about 0.5% to about 70% of the saturated voltage of the liquid crystal is applied to obtain an effective display. It is more preferable that a bias voltage from about 5% to about 50% of the saturated voltage of the liquid crystal is applied. It is more preferable that a bias voltage from about 5% to about 20% of the saturated voltage of the liquid crystal is applied.

Although the liquid crystal layer is sandwiched between the substrates in the above explained examples, a liquid crystal display that a liquid crystal layer formed on a single substrate can be available. In this type, the liquid crystal layer is sandwiched between the substrate and a protect film instead of a substrate.

Furthermore, the liquid crystal display device according to the present invention can be made to have two liquid crystal layers. Here, a liquid crystal layer on the far side from the user is to be called as a lower liquid crystal layer, and that on the near side is called as an upper liquid crystal layer. The lower liquid crystal layer is to be a layer for carrying out a normal display. In addition, the upper liquid crystal layer is made to have a plurality of regions with different directions of orientation with adjacent regions arranged so that the directions of orientation thereof different from each other. This makes the upper liquid crystal layer to be a layer displaying a specified figure when viewed from the directions other than from the front.

With the upper liquid crystal layer in an intermediate displaying state, an image displayed in the lower liquid crystal layer can be seen from the front. However, when the display is viewed from directions other than from the front, the image displayed in the lower liquid crystal layer is screened by the figure displayed in the upper liquid crystal layer to cause difficulty of being observed.

Moreover, with a voltage applied to the upper liquid crystal layer to stand liquid crystal molecules therein, the display is made uniform to allow a displayed image in the lower liquid crystal layer to be visible even when viewed from directions other than from the front. That is, this allows a switching operation that makes the displayed image in the lower crystal layer visible or invisible from directions other than from the front.

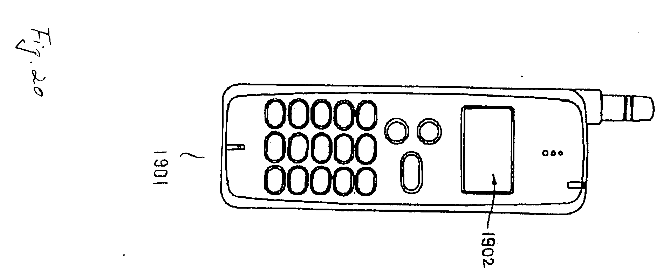

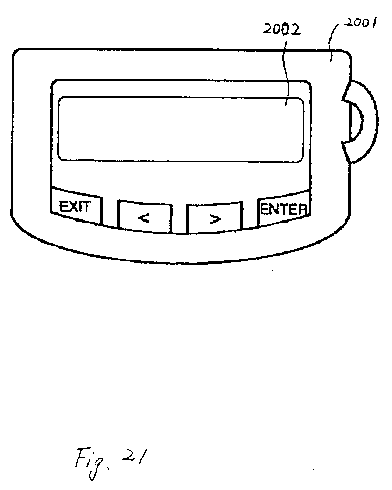

The liquid crystal display can be applied into cellular phones, portable terminals, palm computers, laptop computers and so on. For example, as shown in Fig. 20 or Fig. 21, above explained liquid crystal displays can be use to the display 1902 on the cellular phone 1901, or the display 2002 on the palmtop computer 2001.

As described above in detail, the liquid crystal display device according to the present invention makes a fixed pattern visible which has no relation with an image displayed on the screen when viewed from directions other than that from the front. This can make it difficult to recognize displayed information to make it possible to prevent the displayed information from being surreptitiously looked by other persons through so-called peeping. Furthermore, the fixed pattern can be used for displaying a background figure or a trade name of a product.

According to an embodiment, a liquid crystal display comprises a liquid crystal layer, and alignment layers sandwiching and orientating said liquid crystal layer, wherein surfaces of said alignment layers are divided into a plurality of regions involving a plurality of pixel units, and orientations of said alignment layer in adjacent said regions are different.

Said region may make a letter or a visible figure. Said figure may be a square. Further, a long side of a minimum hypothetical rectangular containing said region may be equal to or larger than 0.1 millimeter.

Still further a maximum voltage for driving said liquid crystal layer may be less than a voltage of a saturated voltage of said liquid crystal layer.

Said maximum voltage for driving said liquid crystal layer Vm and said saturated voltage Vs may have a following relation: 0.005Vs ≤ Vm ≤ 0.7Vs.

The orientation in one of said region may be unique. Also, said orientation of said alignment layer of the same color element in one of said region may be unique.

According to another embodiment, a liquid crystal display comprises a liquid crystal layer and alignment layers sandwiching and orientating said liquid crystal layer, wherein surfaces of said alignment layers are divided into a plurality of regions having different directions of orientations, and a ratio of said regions in at least one pixel is different from a ratio of said regions in the other pixel.

Further, said region may make a letter or a visible figure.

Still further, the liquid crystal display may comprise a liquid crystal layer alignment layers sandwiching and orientating said liquid crystal layer and a driving circuit for said liquid crystal layer, characterized in that an image formed from said driving circuit is displayed head on and a fixed image independent of said driving circuit is displayed to oblique direction.

Said alignment layers may have a plurality of regions whose orientations are different.

Said fixed image may be a letter or a visible figure and said fixed image may have a color.

According to another embodiment, a liquid crystal display comprises a liquid crystal layer alignment layers sandwiching and orientating said liquid crystal layer and a driving circuit for said liquid crystal layer, wherein an image formed from said driving circuit is displayed to a normal direction of said liquid crystal layer and a fixed image independent of said driving circuit is displayed to a direction except said normal direction.

According to another embodiment, a liquid crystal display comprises a first liquid crystal layer displaying an image formed from a driving circuit, a second liquid crystal layer and alignment layers sandwiching and orientating said second liquid crystal layer, wherein said alignment layer has regions containing a visible figure, and orientations of adjacent said regions are different.

According to another embodiment, a liquid crystal display comprises a liquid crystal layer, a pair of substrates sandwiching and orientating said liquid crystal layer and a driving circuit for said liquid crystal layer, wherein an image formed from said driving circuit is displayed head on and a fixed image independent of said driving circuit is displayed to oblique direction.

Said substrate may be made of glass and said driving circuit may be formed on said substrate.

Moreover said driving circuit may be formed separately from said substrate.

According to another embodiment, a terminal device comprises a liquid crystal layer, a pair of substrates sandwiching said liquid crystal layer and a driving circuit for said liquid crystal layer, wherein an image formed from said driving circuit is displayed head on and a fixed image independent of said driving circuit is displayed to oblique direction.

According to another embodiment, a portable terminal device comprises a liquid crystal layer a pair of substrates sandwiching said liquid crystal layer and a driving circuit for said liquid crystal layer, wherein an image formed from said driving circuit is displayed head on and a fixed image independent of said driving circuit is displayed to oblique direction.

## Claims

1. Liquid crystal display comprising a first liquid crystal layer, a second liquid layer, and alignment layers sandwiching and orientating said second liquid crystal layer, **characterized in that** surfaces of said alignment layers are divided into a plurality of regions, and orientations of said alignment layers in adjacent regions are different.

2. Liquid crystal display according to claim 1, **characterized by** a first driving circuit for driving said first liquid crystal layer, wherein said first crystal layer is arranged to display an image formed from said first driving circuit.

3. Liquid crystal display according to claim 1, **characterized in that** a region having identical orientation out of the plurality of regions makes a fixed pattern.

4. Liquid crystal display according to claim 3, **characterized in that** said fixed pattern is square.

5. Liquid crystal display according to claim 1, **characterized in that** a long side of a minimum hypothetical rectangular containing each said region is equal to or larger than 0.1 millimeter.

6. Liquid crystal display according to claim 1, **characterized by** a second driving circuit for driving said second liquid crystal layer, wherein said second driving circuit applies a voltage whose maximum voltage is less than a saturated voltage of said second liquid crystal layer to said second first liquid crystal layer.

7. Liquid crystal display according to claim 6, **characterized in that** said second driving circuit is arranged to produce said maximum voltage for driving said second liquid crystal layer Vm and said saturated voltage Vs with the following relation: 0.005Vs ≤ Vm ≤ 0.7Vs.

8. Liquid crystal display according to claim 1, **characterized in that** said orientation in one of said region is unique.

9. Liquid crystal display according to claim 2, **characterized in that** an image formed from said first driving circuit is displayed head on and a fixed image independent of said first driving circuit is displayed to oblique direction.

10. Liquid crystal display according to claim 9, **characterized in that** said fixed image has a color.

11. Liquid crystal display according to claim 2, **characterized in that** an image formed from said first driving circuit is displayed to a normal direction of said first liquid crystal layer and a fixed image independent of said first driving circuit is displayed to a direction except said normal direction.

12. Liquid crystal display according to claims 1, **characterized by** a pair of substrates sandwiching and orientating said second liquid crystal layer and said alignment layers.

13. Liquid crystal display according to claim 12, **characterized in that** said substrates are made of glass.

14. Liquid crystal display according to claim 12 or 13, **characterized in that** said second driving circuit is formed on said substrate.

15. Liquid crystal display according to claim 12 or 13, **characterized in that** said second driving circuit is formed separately from said substrate.
